# EUROPÄISCHE PATENTSCHRIFT

(11) **EP 1 067 041 B1**
(45) Veröffentlichungstag und Bekanntmachung des Hinweises auf die Patenterteilung: **16.01.2002**
(21) Anmeldenummer: 99810608.2
(22) Anmeldetag: 08.07.1999
(51) Int. Cl.: B62H 1/02

(54) **Hinterradständer für ein Zweirad**
Rear wheel stand for two-wheel vehicle
Support de roue arrière pour véhicule à deux roues

(43) Veröffentlichungstag der Anmeldung: 10.01.2001
(73) Patentinhaber: Gebrueder Pletscher AG, 8460 Marthalen (CH)
(72) Erfinder: Weissenberger, Heinz, 8248 Uhwiesen (CH)
(74) Vertreter: Patentanwälte Schaad, Balass, Menzl & Partner AG

(56) Entgegenhaltungen:
- CH-A- 264 170
- DE-A- 3 515 557
- DE-U- 9 419 135

## Beschreibung

Die Erfindung betrifft einen Hinterradständer für ein Zweirad, insbesondere ein Fahrrad, gemäss dem Oberbegriff des Anspruches 1.

Ein Hinterradständer dieser Art ist beispielsweise aus der DE-U1 94 19 135.2 bekannt. Bei diesem Ständer ist ebenfalls eine aus einer Fahr- bzw. Nichtgebrauchstellung in eine Abstützstellung verschwenkbare Stütze in einem Klemmteil gelagert und mittels desselben an einer Kettenstrebe des Fahrradrahmens festklemmbar. Dieser Klemmteil ist mit einem Halteelement verbunden, das zur Sicherung gegen Verdrehung des Klemmteils auf der Kettenstrebe mit einer mit der Kettenstrebe einen Winkel einschliessenden Sattelstrebe verbunden ist. Das Halteelement weist einen auf der Sattelstrebe montierbaren Einstellteil und ein mit zwei Langlöchern versehenes Koppelungselement auf, das mit dem Einstellteil einerseits und mit dem Klemmteil anderseits verbunden ist. Die Länge des Koppelungselementes und seine Winkelstellung gegenüber dem Klemmteil und gegenüber dem Eistellteil ist einstellbar. Die Einstellung mittels Schrauben muss in beiden Langlöchern, d.h. sowohl klemmteilseitig, als auch einstellteilseitig erfolgen. Der Einstellteil ist im wesentlichen U-förmig ausgebildet und mit einem Rundloch versehen, wobei die Schenkel des Einstellteils zur Erzeugung einer Klemmwirkung mittels Schrauben zusammendrückbar sind. Je nach Durchmesser der Sattelstrebe wird eine entsprechende Klemmhülse in das Rundloch eingesetzt. Ein derart ausgebildeter Ständer kann zwar an Fahrradrahmen mit unterschiedlich grossem Winkel zwischen der Kettenstrebe und der Sattelstrebe montiert werden, es sind jedoch relativ viele Einzelteile und entsprechend komplizierte Montage notwendig.

Der vorliegenden Erfindung liegt die Aufgabe zugrunde, einen an der Kettenstrebe festklemmbaren Hinterradständer zu schaffen, der eine einfache Sicherung der Klemmverbindung gegen Verdrehung ermöglicht, der an unterschiedliche Winkel zwischen der Kettenstrebe und der Sattelstrebe aufweisenden Zweirädern montierbar ist, und der sowohl in der Herstellung, als auch in der Montage einfach ist.

Diese Aufgabe wird erfindungsgemäss durch einen Hinterradständer mit den Merkmalen des Anspruches 1 gelöst.

Bevorzugte Weiterausgestaltungen des erfindungsgemässen Hinterradständers bilden den Gegenstand der abhängigen Ansprüche.

Ein Ausführungsbeispiel des erfindungsgemässen Hinterradständers wird im folgenden anhand der Zeichnung näher beschrieben.

Es zeigen:
- Fig. 1: einen Teil eines Fahrradrahmens in Seitenansicht und einen am Fahrradrahmen angebrachten Fahrradständer;
- Fig. 2: den Fahrradständer nach Fig. 1 in Pfeilrichtung A gesehen;
- Fig. 3: eine der Fig. 1 entsprechende Explosionsdarstellung des Fahrradständers;
- Fig. 4: eine der Fig. 2 entsprechende Explosionsdarstellung des Fahrradständers;
- Fig. 5: einen Schnitt nach Linie V-V in Fig. 2;
- Fig. 6: in Seitenansicht einen Teil des Fahrradständers mit einem zusätzlichen Sicherheitselement; und
- Fig. 7: den Teil mit dem zusätzlichen Sicherheitselement nach Fig. 6 in Pfeilrichtung B gesehen.

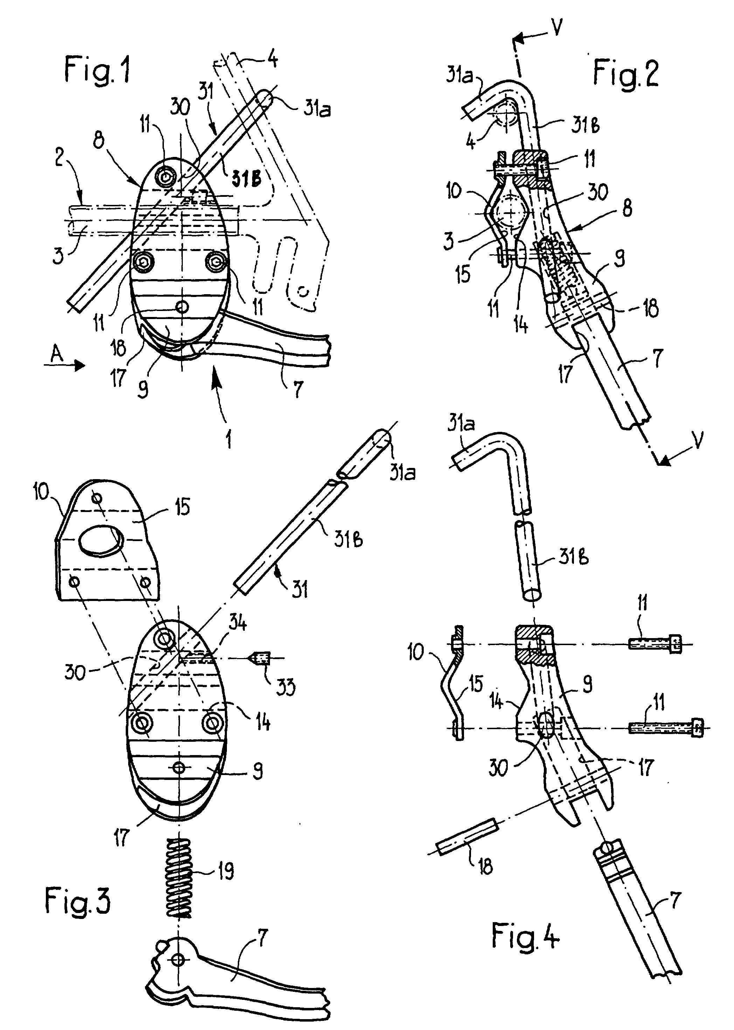

Zur Abstützung eines Zweirades, beispielsweise eines Fahrrades oder eines Motorfahrrades (d.h. eines Fahrrades mit einem Hilfsmotor) ist ein in Fig. 1 bis 5 dargestellter Hinterradständer 1 vorgesehen.

In Fig. 1 ist strichpunktiert ein hinterer Bereich eines Fahrrad-Rahmens 2 dargestellt, an dem der Hinterradständer 1 befestigt ist. Der Rahmen 2 weist eine rohrförmige Kettenstrebe 3 sowie eine Sattelstrebe 4 auf, die zusammen einen Winkel einschliessen. Dieser Winkel kann bei verschiedenen Rahmenausführungen in seiner Grösse variieren.

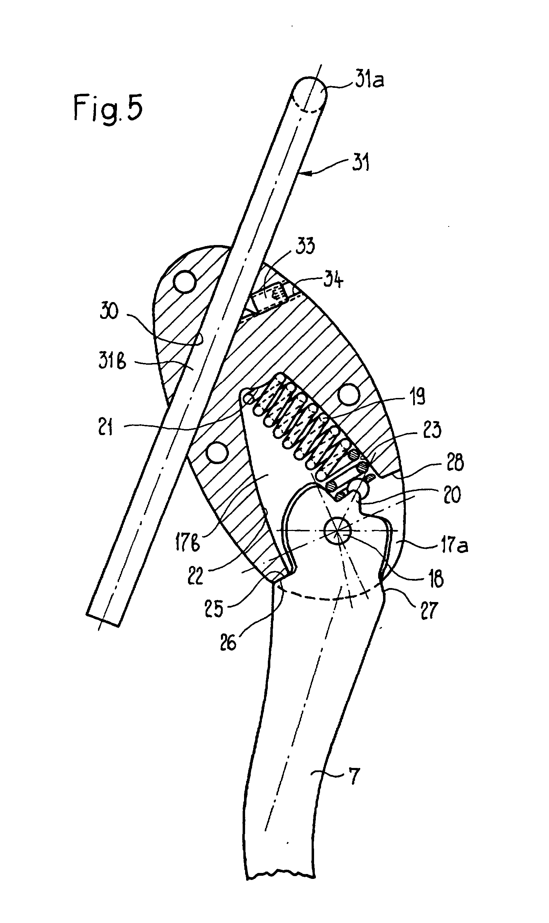

Der Hinterradständer 1 weist eine aus einer Fahr- bzw. Nichtgebrauchstellung (Fig. 1) in eine Abstützstellung (Fig. 2 und 5) verschwenkbare Stütze 7 auf, die in einem Klemmteil 8 schwenkbar gelagert und mit diesem an der Kettenstrebe 3 befestigbar ist. Der Klemmteil 8 besteht aus einem die Stütze 7 aufnehmenden Halteteil 9 sowie einem Klemmstück 10, die mittels Schrauben 11 miteinander verbunden sind und mit ihren einander gegenüberliegenden, nutenförmigen Ausnehmungen 14, 15 (Fig. 2 und 4) eine Art Klemmbacken zum Festklemmen des Hinterradständers 1 auf der Kettenstrebe 3 bilden. Es sind gegebenenfalls drei Schrauben 11 vorhanden.

Die Stütze 7 ragt in eine Ausnehmung 17 im Halteteil 9 hinein, die einen gabelförmigen Teil 17a sowie einen inneren Teil 17b aufweist (Fig. 5). Der innere, nicht gabelförmige Teil 17b der Ausnehmung 17 weist Seitenwände 22, 23 sowie eine diese verbindende Fläche 21 auf. Die Stütze 7 ist um einen in den Halteteil 9 eingesetzten Zylinderstift 18 entgegen der Kraft einer im inneren Teil 17b der Ausnehmung 17 angeordneten Druckfeder 19 zwischen zwei Endstellungen (Abstützstellung, Fahr- bzw. Nichtgebrauchstellung) verschwenkbar. Die Druckfeder 19 ist zwischen einer Nase 20 der Stütze 7 und der Fläche 21 der Ausnehmung 17 vorgespannt. In Fig. 5 ist die der Abstützstellung entsprechende Endstellung der Stütze 7 dargestellt, bei welcher eine Anschlagfläche 25 der Stütze 7 an einer an die Seitenwand 22 angrenzenden Fläche 26 des Halteteils 9 anliegt. Die Druckfeder 19 befindet sich im Bereich der anderen Seitenwand 23. In der der Fahr- bzw. Nichtgebrauchstellung entsprechenden Endstellung der Stütze 7 kommt eine Anschlagfläche 27 der Stütze 7 an einer an die Seitenwand 23 angrenzenden Fläche 28 des Halteteils 9 zum Anliegen, und die Druckfeder 19 wird zur Seitenwand 22 gedrückt.

Der Halteteil 9 des Klemmteils 8 ist mit einer windschief zur nutenförmigen Ausnehmung 14 verlaufenden Bohrung 30 versehen. In der Bohrung 30 ist ein stabförmiges Halteelement 31 mit seinem Führungsteil 31b verschiebbar angeordnet, das einen an den Führungsteil 31b anschliessenden, hakenförmigen Einhängeteil 31a aufweist. Die Bohrung 30 und das Halteelement 31 sind derart angeordnet, dass das Halteelement 31 mit dem Einhängeteil 31a an der Sattelstrebe 4 eingehängt werden kann und auf diese Art den Klemmteil 8 gegen unerwünschtes Verdrehen gegenüber der Kettenstrebe 3 sichert. Die Verschiebbarkeit des Halteelementes 31 bzw. des Führungsteils 31b in der Bohrung 30 ermöglicht die Verwendung des gleichen Hinterradständers 1 für verschiedene Rahmenausführungen, auch wenn der Winkel zwischen der Kettenstrebe 3 und der Sattelstrebe 4 variiert. Die für eine bestimmte Rahmenausführung passende Stellung des Halteelementes 31 wird mittels eines Arretierungsstiftes 33 fixiert, der als ein Gewindestift in einer in die Bohrung 30 mündenden Gewindebohrung 34 im Halteteil 9 eingeschraubt ist (Fig. 3 und 5).

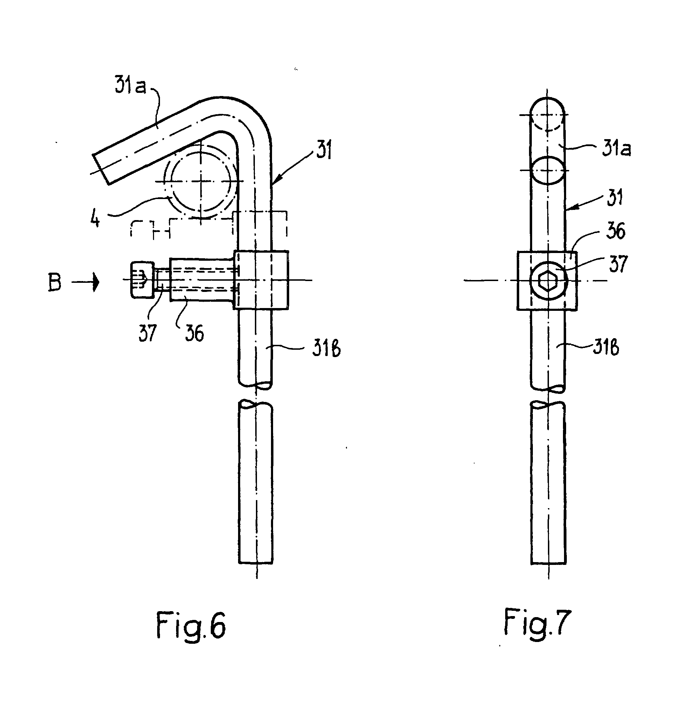

Der Hinterradständer 1 ist sowohl in der Herstellung, als auch in der Montage äusserst einfach, da nur wenig Einzelteile notwendig sind. Es ist nur eine Klemmverbindung an einer der beiden Fahrradstreben, nämlich an der Kettenstrebe 3 notwendig, und dennoch ist diese Verbindung in einfacher Weise gegen unerwünschtes Verdrehen gesichert. Die Klemmkonstruktion selbst kann einfach ausgestaltet werden. Der hakenförmige Einhängeteil 31a des Halteelementes 31 kann für Sattelstreben 4 verschiedener Durchmesser verwendet werden. Falls gewünscht, kann zusätzlich eine aus Fig. 6 und 7 ersichtliche, am Halteelement 31 verschiebbar angeordnete und mittels einer Stellschraube 37 in einer die Sattelstrebe 4 untergreifenden Stellung fixierbare Klemmbride 36 beispielsweise aus Kunststoff die Verbindung des Halteelementes 31 mit der Sattelstrebe 4 sichern.

Das Halteelement 31, der Halteteil 9 und das Klemmstück 10 sowie die Stütze 7 sind vorzugsweise aus einem Leichtmetall, z.B. aus Aluminium hergestellt.

## Patentansprüche

1. Hinterradständer für ein Zweirad, insbesondere ein Fahrrad, der am eine Kettenstrebe (3) und eine mit letzterer einen Winkel bildende Sattelstrebe (4) aufweisenden Rahmen (2) des Zweirades befestigbar ist, mit einer aus einer Fahr- bzw. Nichtgebrauchstellung in eine Abstützstellung verschwenkbaren Stütze (7), die in einem Klemmteil (8) schwenkbar gelagert ist, der an der Kettenstrebe (3) festklemmbar ist, und mit einem mit dem Klemmteil (8) verbundenen Halteelement (31), das zur Sicherung des Klemmteils (8) gegen Verdrehung mit der Sattelstrebe (4) verbindbar ist, **dadurch gekennzeichnet, dass** das Halteelement (31) stabförmig ausgebildet ist und einen im Klemmteil (8) längsverschiebbaren Führungsteil (31b) sowie einen an diesen anschliessenden, hakenförmigen Einhängeteil (31a) aufweist, der zum Übergreifen der Sattelstrebe (4) bestimmt ist, wobei der Führungsteil (31b) in jeweils einer bestimmten Stellung arretierbar ist.

2. Hinterradständer nach Anspruch 1, **dadurch gekennzeichnet, dass** der Klemmteil (8) einen die Stütze (7) aufnehmenden Halteteil (9) und einen mit diesem verschraubbaren Klemmstück (10) aufweist, die mit nutenförmigen, zum Festklemmen der Kettenstrebe (3) vorgesehenen Ausnehmungen (14, 15) versehen sind.

3. Hinterradständer nach Anspruch 2, **dadurch gekennzeichnet, dass** der Halteteil (9) mit einer Bohrung (30) für den Führungsteil (31b) versehen ist, die windschief zu der nutenförmigen Ausnehmung (14) angeordnet ist.

4. Hinterradständer nach Anspruch 3, **dadurch gekennzeichnet, dass** der Halteteil (9) mit einer in die Bohrung (30) für den Führungsteil (31b) mündenden Gewindebohrung (34) versehen ist, in der ein Arretierungsstift (33) zur Arretierung des Führungsteils (31b) angeordnet ist.

5. Hinterradständer nach einem der Ansprüche 1 bis 4, **dadurch gekennzeichnet, dass** zur Sicherung der Verbindung des Halteelementes (31) mit der Sattelstrebe (4) am Führungsteil (31b) des Halteelementes (31) eine Klemmbride (36) verschiebbar angeordnet ist, die dazu bestimmt ist, die Sattelstrebe (4) zu untergreifen, und die mittels einer Stellschraube (37) jeweils in einer bestimmten Stellung zwischen dem Klemmteil (8) und dem hakenförmigen Einhängeteil (31a) am Führungsteil (31b) fixierbar ist.

## Claims

1. Rear wheel stand for a two-wheeled vehicle, in particular a bicycle, which can be fastened to the two-wheeled vehicle frame (2), which has a chain strut (3) and a saddle strut (4), which forms an angle with the latter, having a prop (7) which can be pivoted from a travelling or inoperative position into a supporting position and which is mounted pivotably in a clamping part (8) which can be clamped to the chain strut (3), and having a holding element (31) which is connected to the clamping part (8) and can be connected to the saddle strut (4) in order to secure the clamping part (8) against rotating, **characterized in that** the holding element (31) is designed in the form of a bar and has a guide part (31b) which can be displaced longitudinally in the clamping part (8) and a hook-shaped attachment part (31a) which adjoins the said guide part and is intended for fitting over the saddle strut (4), it being possible for the guide part (31b) to be locked in a particular position in each case.

2. Rear wheel stand according to Claim 1, **characterized in that** the clamping part (8) has a holding part (9), which holds the prop (7), and a clamping piece (10) which can be screwed to the said holding part, the said holding part and clamping piece being provided with groove-shaped recesses (14, 15) which are provided for the clamping of the chain strut (3).

3. Rear wheel stand according to Claim 2, **characterized in that** the holding part (9) is provided with a hole (30) for the guide part (31b), the said hole being arranged at an oblique angle to the groove-shaped recess (14).

4. Rear wheel stand according to Claim 3 **characterized in that** the holding part (9) is provided with a threaded hole (34) which opens into the hole (30) for the guide part (31b) and in which a locking pin (33) for the locking of the guide part (31b) is arranged.

5. Rear wheel stand according to one of Claims 1 to 4, **characterized in that** in order to secure the connection of the holding element (31) to the saddle strut (4), a clamping clip (36) is arranged displaceably on the guide part (31b) of the holding element (31) and is intended to grip the saddle strut (4) from below and can be fixed in each case in a particular position between the clamping part (8) and the hook-shaped attachment part (31a) on the guide part (31b) by means of an adjusting screw (37).

## Revendications

1. Support de roue arrière pour un deux-roues, en particulier une bicyclette, pouvant être fixé sur le cadre (2) du deux-roues présentant un montant de chaîne (3) et un montant de selle (4) formant un angle avec ce dernier, ayant une béquille (7) pouvant être pivotée d'une position d'utilisation ou de non-utilisation dans une position d'appui, laquelle béquille est montée de manière pivotante dans une partie de serrage (8), qui peut être fixée par serrage sur le montant de chaîne (3), et ayant un élément de retenue (31) relié à la partie de serrage (8), lequel élément de retenue peut être relié au montant de selle (4) pour bloquer la partie de serrage (8) contre toute rotation, **caractérisé en ce que** l'élément de retenue (31) est réalisé en forme de tige et présente une partie de guidage (31b) pouvant être coulissée longitudinalement dans la partie de serrage (8) ainsi qu'une partie d'accrochage (31a) en forme de crochet raccordée à la partie de guidage (31b), laquelle partie d'accrochage (31a) est prévue pour saisir le montant de selle (4) par le dessus, la partie de guidage (31b) pouvant être arrêtée dans une position donnée.

2. Support de roue arrière selon la revendication 1, **caractérisé en ce que** la partie de serrage (8) présente une partie de retenue (9) recevant la béquille (7) et un élément de serrage (10) pouvant être vissé avec la partie de retenue, qui sont pourvus d'évidements (14, 15) en forme de rainures prévus pour serrer le montant de chaîne (3).

3. Support de roue arrière selon la revendication 2, **caractérisé en ce que** la partie de retenue (9) est pourvue d'un alésage (30) pour la partie de guidage (31b), lequel alésage est disposé en biais par rapport à l'évidement en forme de rainure (14).

4. Support de roue arrière selon la revendication 3, **caractérisé en ce que** la partie de retenue (9) est pourvue d'un trou taraudé (34) débouchant dans l'alésage (30) prévu pour la partie de guidage (31b), dans lequel trou taraudé (34) est montée une cheville d'arrêt (33) pour bloquer la partie de guidage (31b).

5. Support de roue arrière selon l'une des revendications 1 à 4, **caractérisé en ce que**, pour bloquer la liaison de l'élément de retenue (31) avec le montant de selle (4), une bride de serrage (36) est montée de manière mobile sur la partie de guidage (31b) de l'élément de retenue (31), laquelle bride de serrage (36) est prévue pour saisir le montant de selle (4) par le dessous, et peut être fixée au moyen d'une vis de fixation (37) dans une position donnée entre la partie de serrage (8) et la partie d'accrochage en forme de crochet (31a) sur la partie de guidage (31b).
